# EUROPÄISCHE PATENTSCHRIFT

(11) **EP 2 882 939 B1**
(45) Veröffentlichungstag und Bekanntmachung des Hinweises auf die Patenterteilung: **08.01.2020**
(21) Anmeldenummer: 12772752.7
(22) Anmeldetag: 05.10.2012
(51) Int. Cl.: F01D 5/00, B23P 6/00, F01D 5/28

(54) **VERFAHREN ZUR AUFBEREITUNG EINER GASTURBINENSCHAUFEL SOWIE VERWENDUNG EINER GASTURBINE MIT DERARTIGER SCHAUFEL**
METHOD FOR REFURBISHING A GAS TURBINE BLADE AND USE OF A GAS TURBINE HAVING SAID BLADE
PROCÉDÉ DE RECONDITIONNEMENT D'UNE AUBE DE TURBINE À GAZ AINSI QUE L'USAGE D'UNE TURBINE À GAZ POURVUE D'UNE TELLE AUBE

(43) Veröffentlichungstag der Anmeldung: 17.06.2015
(73) Patentinhaber: Siemens Aktiengesellschaft, 80333 München (DE)
(72) Erfinder: BULLINGER, Patrick, 90482 Nürnberg (DE); PAHL, Andreas, 40589 Düsseldorf (DE); REIERMANN, Dietmar, 14476 Potsdam (DE); RINDLER, Michael, 15566 Schöneiche (DE); GROSSHÄUSER, Martin, 91052 Erlangen (DE); STAMM, Werner, 45481 Mülheim an der Ruhr (DE)
(86) Internationale Anmeldenummer: PCT/EP2012/069700
(87) Internationale Veröffentlichungsnummer: WO 2014/053185

(56) Entgegenhaltungen:
- EP-A1- 1 076 158
- EP-A1- 1 247 941
- EP-A1- 1 428 902
- EP-A1- 1 491 658
- EP-A1- 1 806 430
- EP-A1- 1 985 803
- EP-A1- 2 230 329
- EP-A1- 2 407 579
- EP-A2- 1 674 663
- EP-A2- 2 112 253
- US-A1- 2003 203 224
- US-A1- 2007 274 837
- US-A1- 2009 311 508

## Beschreibung

Die Erfindung betrifft ein Verfahren zur Herstellung von Gasturbinen, die flexibel ausgelegt werden, und eine Verwendung von Gasturbinen.

Gasturbinen können bei der Stromerzeugung im Grundlastbetrieb oder insbesondere im Spitzenlastbetrieb betrieben werden.

Die Anforderungen an die jeweiligen Bedingungen sind unterschiedlich.

Eine optimierte Konfiguration der Gasturbine, die beide Anforderungen erfüllt, würde immer einen Kompromiss darstellen.

Es ist daher Aufgabe der Erfindung dieses Problem zu lösen.

Die Aufgabe wird gelöst durch ein Verfahren zur Herstellung einer zweiten Gasturbine gemäß Anspruch 1 und eine Verwendung gemäß Anspruch 17.

In den Unteransprüchen sind weitere vorteilhafte Maßnahmen aufgelistet, die beliebig miteinander kombiniert werden können, um weitere Vorteile zu erzielen.

Es zeigen:
- Figur 1 - 3: Ausführungsbeispiel der Erfindung,
- Figur 4: eine Porenverteilung keramischer Schicht,
- Figur 5: eine Turbinenschaufel und
- Figur 6: eine Gasturbine.

Die Beschreibung stellt nur ein Ausführungsbeispiel der Erfindung dar.

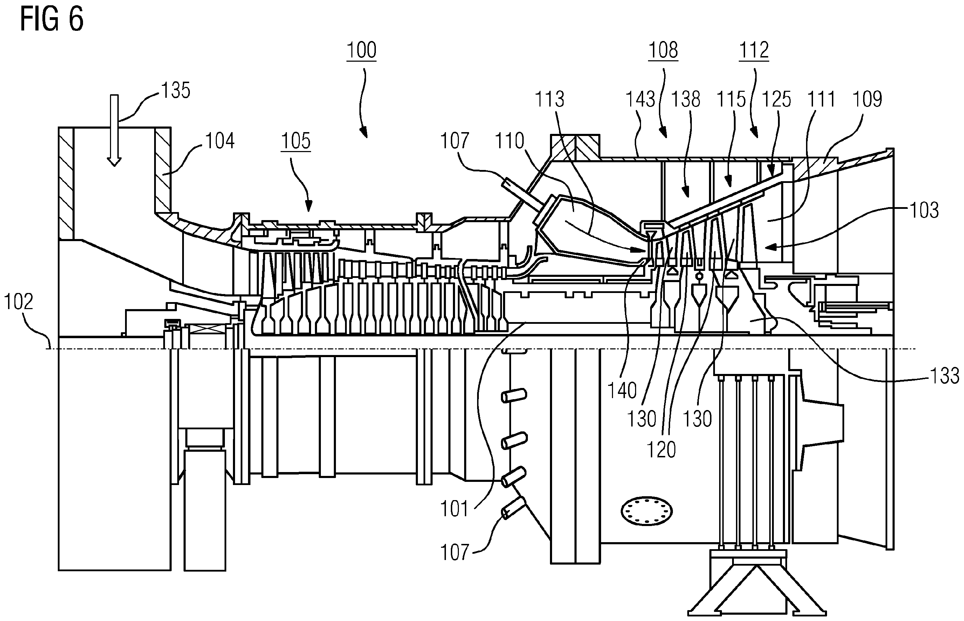

Ein Intervall der Wartung von Gasturbinen 100 (Fig. 6) wird bestimmt durch Erfassung der Betriebsstunden und Starts, die abhängig von der Betriebsweise und bestimmten Faktoren sind. Die Wartung ist jeweils nach Erreichen des Stunden- oder Startlimits durchzuführen.

Ist nun je nach Einsatzgebiet der Gasturbine eine Wartung notwendig oder verlangt der Einsatz vorab eine Überholung bzw. einen anderen Einsatz, so wird die Konfiguration der Gasturbine 100 geändert.

### Begriffsdefinitionen:

Erste Gasturbine hat 1. Turbinenschaufel mit 1. Wärmedämmschicht.

Zweite Gasturbine hat Turbinenschaufeln mit keramischen Wärmedämmschichten
a) bei denen die 1. Turbinenschaufeln (=zweite Turbinenschaufel) und/oder
b) neue unverbrauchte Turbinenschaufeln (= neue zweite Turbinenschaufeln)
verwendet werden
und jeweils eine 2. Wärmedämmschicht deutlich unterscheidbar von der 1. Wärmedämmschicht aufweisen.

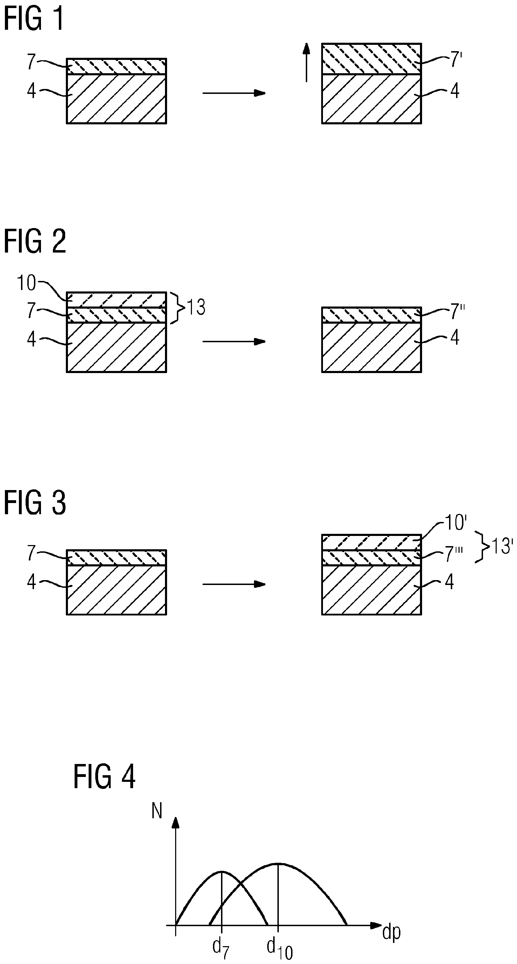

War vorher in dieser ersten Gasturbine eine einlagige Wärmedämmschicht wie oben beschrieben im Betrieb vorhanden, so wird für den erneuten Einsatz im Grundlastbetrieb eine zweilagige (Fig. 3), eine dickere (Fig. 1) oder porösere keramische Wärmedämmschicht für die Turbinenschaufeln 120, 130 verwendet.

Die Turbinenschaufeln für die zweite Gasturbine können im Ursprung (dasselbe Substrat) die ersten Turbinenschaufeln der ersten Gasturbine oder anderer Gasturbinen sein, die bereits im Einsatz waren, entsprechend aufgearbeitet wurden (Refurbishment) und durch eine Wiederbeschichtung zweite Turbinenschaufeln ergeben oder neue zweite Turbinenschaufeln sein, bei denen neu hergestellte (neu gegossene), noch nicht verwendete Turbinenschaufeln anders als die ersten Turbinenschaufeln der ersten Gasturbine beschichtet werden.

Ebenso ist es möglich, wenn die Gasturbine 100 im Grundlastbetrieb eine zweilagige keramische Wärmedämmschicht auf den Turbinenschaufeln 120, 130 aufgewiesen hat, eine einlagige TBC aufzubringen, so dass sie dann im Spitzenlastbetrieb (daily starter) eingesetzt werden kann (Fig. 2).

Für den Spitzenlastbetrieb wird vorzugsweise nur eine einlagige keramische Schicht mit einer einheitlichen Porosität verwendet. Für den Spitzenlastbetrieb weist die keramische Wärmedämmschicht auf den Turbinenschaufeln 120, 130 vorzugsweise eine hohe Porosität von 18% ± 4% auf.

Im Grundlastbetrieb (base loader) wird jedoch eine zweilagige Wärmedämmschicht 13 eingesetzt (Fig. 3).

Als Ausgangspulver für die keramischen Schichten 7', 7", 7'", 10', 13' wird vorzugsweise agglomeriertes, gesintertes Pulver verwendet.

Jede keramische gespritzte Schicht wird in Beschichtungslagen aufgebracht. Zweilagigkeit bedeutet aber, dass sich eine zweite Lage durch Porosität und/oder Mikrostruktur und/oder chemische Zusammensetzung von einer ersten, untenliegenden Lage unterscheidet.

Als untere Lage wird vorzugsweise eine keramische Lage 7 mit einer Porosität von 12% ± 4% verwendet, die vorzugsweise eine Schichtdicke von 75µm bis 150µm aufweist.

Darüber wird als äußere keramische Lage 10 eine Porosität mit 25% ± 4% gespritzt bzw. ist vorhanden.

Der Unterschied in der Porosität beträgt jedoch mindestens 2%, insbesondere mindestens 4%. Schwankungen in der Porosität bei der Herstellung sind bekannt. Innerhalb einer Charge, d.h. eines Schaufelsatzes, sind keine Schwankungen zu verzeichnen.

Um Porositäten in keramischen Schichten oder keramischen Lagen (Figuren 1 - 3) zu erzeugen, können beim Spritzen grobe Körner verwendet werden und Verwendung von Polymeren oder kleinere Körner mit Polymer verwendet werden, wobei grob einen mindestens 20% größeren mittleren Teilchendurchmesser bedeutet.

Eine zweilagige keramische Schicht 7, 10 kann mit verschiedenen Spritzverfahren hergestellt werden: die untere Lage 7 wird ohne Polymer und die obere Lage 10 wird mit Polymer verspritzt.

Dadurch ergeben sich in der oberen Lage 10 größere Poren, d.h. der mittlere Porendurchmesser d₁₀ steigt gegenüber dem mittleren Porendurchmesser d₇ der unteren Lage 7 (Fig. 4) an. Dies ist nicht zwangsläufig so. Eine höhere Porosität wird oft nur durch eine höhere Anzahl Poren der gleichen Porengröße erzielt.

Vorzugsweise wird das gleiche Pulver dabei verwendet, also auch eine gleiche Korngrößenverteilung.

Zirkonoxid (ZrO₂) für die keramischen Lagen der Wärmedämmschichten weist vorzugsweise einen monoklinen Anteil von ≤ 3%, insbesondere ≤ 1,5% aufweist. Dementsprechende Anteile weist dann eine keramische Lage oder Schicht 7, 7', 10, 13 (Figuren 1 - 3) auf der Turbinenschaufel 120, 130 auf.

Der Minimumanteil der monoklinen Phase beträgt mindestens 1%, insbesondere 0,5%, um die Kosten des Pulvers nicht zu stark zu erhöhen.

Durch die Veränderung der Konfiguration der ersten Wärmedämmschicht 7', 7", 13' wird quasi eine andere, zweite Gasturbine hergestellt, die optimiert ist auf ihr Einsatzgebiet.

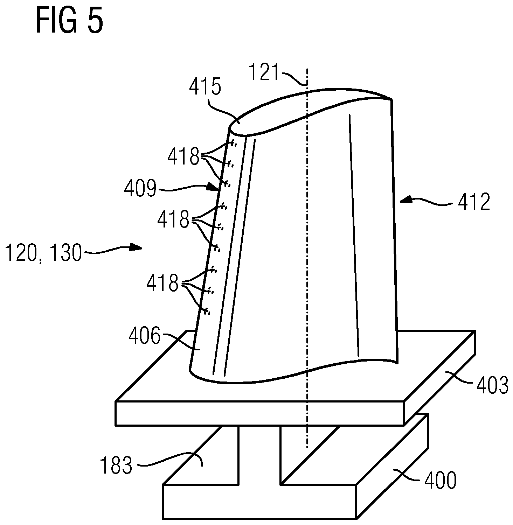

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verfahren zur Herstellung einer zweiten Gasturbine, bei dem ausgehend von einer ersten Gasturbine von ersten Turbinenschaufeln der ersten Gasturbine zumindest eine erste keramische Wärmedämmschicht (7, 13) entfernt wird und eine neue zweite keramische Wärmedämmschicht (7', 7", 13') zur Herstellung zweiter Turbinenschaufeln (7) auf die entschichteten ersten Turbinenschaufeln aufgebracht wird, und/oder
auf neue zweite Turbinenschaufeln,
die neu hergestellt wurden,
eine neue zweite keramische Wärmedämmschicht (7', 7", 13') aufgebracht wird,
die (7', 7", 13') sich von der ersten keramischen Wärmedämmschicht (7, 13) deutlich unterscheidet,
nämlich dass die Porosität unterschiedlich ist,
wobei der absolute Unterschied in der verkleinerten oder vergrößerten Porosität mindestens 2% beträgt,
wobei Unterscheidung zumindest weiterhin bedeutet:
die Schichtdicke ist unterschiedlich,
wobei der Unterschied in der reduzierten und vergrößerten Schichtdicke mindestens 50µm beträgt,
und/oder
die Lagigkeit ist unterschiedlich,
wobei
entweder eine zweilagige keramische Wärmedämmschicht (13) von den ersten Turbinenschaufeln entfernt wird und eine einlagige Wärmedämmschicht (7") als zweite keramische Wärmedämmschicht auf die zweiten oder neuen zweiten Turbinenschaufeln aufgebracht wird,
oder
wobei eine einlagige Wärmedämmschicht (7) von den ersten Turbinenschaufeln entfernt wird und eine zweilagige Wärmedämmschicht (13') als zweite keramische Wärmedämmschicht auf die zweiten oder neuen zweiten Turbinenschaufeln aufgebracht wird,
insbesondere eine nur zweilagige Wärmedämmschicht (13') und wobei die neuen zweiten und/oder die zweiten Turbinenschaufeln in die zweite Gasturbine eingebaut werden.

2. Verfahren nach Anspruch 1,
bei dem die einlagige keramische Wärmedämmschicht (7") mit einer Porosität von 18% ± 4% erzeugt wird.

3. Verfahren nach einem oder beiden der Ansprüche 1 oder 2,
bei dem die Porosität der zweiten keramischen Wärmedämmschicht (7', 7", 13') der zweiten oder der neuen zweiten Turbinenschaufeln gegenüber der Porosität der Wärmedämmschicht der ersten Turbinenschaufeln erhöht wird.

4. Verfahren nach einem oder beiden der Ansprüche 1 oder 2,
bei dem die Porosität der zweiten keramischen Wärmedämmschicht (7', 7", 13) der zweiten oder der neuen zweiten Turbinenschaufeln gegenüber der Porosität der Wärmedämmschicht der ersten Turbinenschaufeln erniedrigt wird.

5. Verfahren nach einem oder mehreren der Ansprüche 1 bis 3,
bei dem eine dünnere keramische Wärmedämmschicht (7) als erste keramische Wärmedämmschicht ersetzt wird durch eine dickere keramische Wärmedämmschicht (7', 13') als zweite keramische Wärmedämmschicht der zweiten oder der neuen zweiten Turbinenschaufeln,
wobei der Unterschied in der Dicke mindestens +50µm beträgt.

6. Verfahren nach einem oder mehreren der Ansprüche 1 bis 4,
bei dem eine dickere keramische Wärmedämmschicht als erste keramische Wärmedämmschicht ersetzt wird durch eine dünnere keramische Wärmedämmschicht als zweite keramische Wärmedämmschicht der zweiten oder der neuen zweiten Turbinenschaufeln,
wobei der Unterschied in der Dicke mindestens -50µm beträgt.

7. Verfahren nach einem oder mehreren der Ansprüche 1, 3 bis 6,
bei dem eine zweilagige Wärmedämmschicht (13') mit einer untersten keramischen Lage (7'") mit einer Porosität von 12% ± 4% und
mit einer äußeren keramischen Lage (10') mit einer Porosität von 25% ± 4% erzeugt wird,
wobei der absolute Unterschied in der Porosität der keramischen Schichten (7'", 10') mindestens 2%, insbesondere mindestens 4% beträgt.

8. Verfahren nach einem oder mehreren der Ansprüche 1, 3 bis 7,
bei dem die untere Lage (7'") der zweilagigen Wärmedämmschicht (13) dünner, insbesondere mindestens 20% dünner ausgeführt ist als die obere Lage (10'),
insbesondere bei dem die untere Lage (7"') der zweilagigen Wärmedämmschicht (13) eine Dicke von 75µm bis 150µm aufweist,
ganz insbesondere die Gesamtschichtdicke der zweilagigen Wärmedämmschicht (13) 500µm bis 800µm beträgt.

9. Verfahren nach einem oder mehreren der Ansprüche 1, 3 bis 8,
bei dem für die untere keramische Lage (7'") teilstabilisiertes Zirkonoxid und
für die obere keramische Lage (10') teilstabilisiertes Zirkonoxid verwendet wird.

10. Verfahren nach einem oder mehreren der vorherigen Ansprüche,
bei dem Zirkonoxid für die keramische Wärmedämmschicht (7', 7", 13') oder die keramischen Lagen (7"', 10') verwendet wird,
und der monokline Anteil des zu verspritzenden Pulvers unter 3%,
insbesondere unter 1,5% liegt,
ganz insbesondere mindestens 0,3% beträgt.

11. Verfahren nach einem oder beiden der Ansprüche 9 oder 10,
bei dem der tetragonale Anteil in Zirkonoxid den größten Anteil aufweist,
insbesondere mindestens 60%,
ganz insbesondere mindestens 75%.

12. Verfahren nach Anspruch 10 oder 11,
bei dem durch eine Wärmebehandlung der monokline Anteil des Zirkonoxids,
insbesondere des zu verspritzenden Pulvers,
um mindestens 50% reduziert wird,
insbesondere unter die Nachweisgrenze.

13. Verfahren nach einem oder mehreren der Ansprüche 1, 3 bis 12,
bei dem die untere Lage (7'") ohne Polymer verspritzt wird und die obere Lage (10') mit Polymer verspritzt wird.

14. Verfahren nach einem oder mehreren der Ansprüche 1, 3 bis 13,
bei dem der mittlere Porendurchmesser (d₁₀) der oberen keramischen Lage (10') größer erzeugt wird als der mittlere Porendurchmesser (d₇) der unteren keramischen Lage (7"'), ganz insbesondere um mindestens 20µm.

15. Verfahren nach einem oder mehreren der Ansprüche 1, 3 bis 14,
bei dem das gleiche Pulver mit gleicher Zusammensetzung und gleicher Korngrößenverteilung verwendet wird.

16. Verfahren nach Anspruch 1, 3 bis 14,
bei dem für die untere keramische Lage (7"') ein anderes Material verwendet wird als für die obere keramische Lage (10'),
insbesondere Zirkonoxid für die untere Lage (7'"), ganz insbesondere ein Pyrochlor für die obere Lage (10').

17. Verwendung einer Gasturbinenanlage, bei der die Art von keramischen Schichten von Turbinenschaufeln der Gasturbine (100) gemäss Anspruch 1 verändert wird.

18. Verwendnug einer Gasturbinenanlage nach Anspruch 17, wobei tägliche Starts der Gasturbine erfolgen.

19. Verwendung einer Gasturbinenanlage nach Anspruch 18, wobei die Gasturbine mehrere Tage kontinuierlich in Betrieb ist.

## Claims

1. Process for producing a second gas turbine,
in which, proceeding from a first gas turbine, at least one first ceramic thermal barrier coating (7, 13) is removed from first turbine blades or vanes of the first gas turbine and a new, second ceramic thermal barrier coating (7', 7", 13') is applied to the first turbine blades or vanes from which the coating has been removed to produce second turbine blades or vanes (7),
and/or
a new, second ceramic thermal barrier coating (7', 7", 13') is applied to new, second turbine blades or vanes which have been newly produced,
which (7', 7", 13') differs significantly from the first ceramic thermal barrier coating (7, 13),
namely that the porosity is different,
the absolute difference in the reduced or increased porosity being at least 2%,
in which case a difference also means at least:
the coating thickness is different,
the difference in the reduced and increased coating thickness being at least 50 µm,
and/or
the layer nature is different,
wherein
either a two-layer ceramic thermal barrier coating (13) is removed from the first turbine blades or vanes and a single-layer thermal barrier coating (7") is applied as a second ceramic thermal barrier coating to the second or new, second turbine blades or vanes,
or
wherein a single-layer thermal barrier coating (7) is removed from the first turbine blades or vanes and a two-layer thermal barrier coating (13') is applied as a second ceramic thermal barrier coating to the second or new, second turbine blades or vanes,
in particular an only two-layer thermal barrier coating (13'), and wherein the new, second and/or the second turbine blades or vanes are incorporated in the second gas turbine.

2. Process according to Claim 1,
in which the single-layer ceramic thermal barrier coating (7") is produced with a porosity of 18% ± 4%.

3. Process according to either or both of Claims 1 and 2,
in which the porosity of the second ceramic thermal barrier coating (7', 7", 13') of the second or of the new, second turbine blades or vanes is elevated compared to the porosity of the thermal barrier coating of the first turbine blades or vanes.

4. Process according to either or both of Claims 1 and 2,
in which the porosity of the second ceramic thermal barrier coating (7', 7", 13) of the second or of the new, second turbine blades or vanes is lowered compared to the porosity of the thermal barrier coating of the first turbine blades or vanes.

5. Process according to one or more of Claims 1 to 3,
in which a thinner ceramic thermal barrier coating (7) as the first ceramic thermal barrier coating is replaced by a thicker ceramic thermal barrier coating (7', 13') as the second ceramic thermal barrier coating of the second or of the new, second turbine blades or vanes,
the difference in the thickness being at least + 50 µm.

6. Process according to one or more of Claims 1 to 4,
in which a thicker ceramic thermal barrier coating as the first ceramic thermal barrier coating is replaced by a thinner ceramic thermal barrier coating as the second ceramic thermal barrier coating of the second or of the new, second turbine blades or vanes,
the difference in the thickness being at least - 50 µm.

7. Process according to one or more of Claims 1, 3 to 6,
in which the two-layer thermal barrier coating (13') is produced with a bottommost ceramic layer (7'") having a porosity of 12% ± 4% and
with an outer ceramic layer (10') having a porosity of 25% ± 4%,
the absolute difference in the porosity of the ceramic layers (7'", 10') being at least 2%,
in particular at least 4%.

8. Process according to one or more of Claims 1, 3 to 7,
in which the bottom layer (7'") of the two-layer thermal barrier coating (13) is designed to be thinner,
in particular at least 20% thinner, than the top layer (10'), in particular in which the bottom layer (7"') of the two-layer thermal barrier coating (13) has a thickness of 75 µm to 150 µm,
very particularly the total coating thickness of the two-layer thermal barrier coating (13) is 500 µm to 800 µm.

9. Process according to one or more of Claims 1, 3 to 8,
in which partially stabilized zirconium oxide is used for the bottom ceramic layer (7'") and
partially stabilized zirconium oxide is used for the top ceramic layer (10').

10. Process according to one or more of the preceding claims, in which zirconium oxide is used for the ceramic thermal barrier coating (7', 7", 13') or the ceramic layers (7'", 10'),
and the monoclinic proportion of the powder to be sprayed is less than 3%,
in particular less than 1.5%,
very particularly is at least 0.3%.

11. Process according to either or both of Claims 9 and 10,
in which the tetragonal proportion has the greatest proportion in zirconium oxide,
in particular at least 60%,
very particularly at least 75%.

12. Process according to Claim 10 or 11,
in which a heat treatment reduces the monoclinic proportion of the zirconium oxide,
in particular of the powder to be sprayed,
by at least 50%,
in particular below the detection limit.

13. Process according to one or more of Claims 1, 3 to 12,
in which the bottom layer (7'") is sprayed without polymer and the top layer (10') is sprayed with polymer.

14. Process according to one or more of Claims 1, 3 to 13, in which the mean pore diameter (d₁₀) of the top ceramic layer (10') is produced so as to be greater than the mean pore diameter (d₇) of the bottom ceramic layer (7'"), very particularly by at least 20 µm.

15. Process according to one or more of Claims 1, 3 to 14,
in which use is made of the same powder with the same composition and with the same grain size distribution.

16. Process according to Claims 1, 3 to 14,
in which a different material is used for the bottom ceramic layer (7'") than for the top ceramic layer (10'),
in particular zirconium oxide for the bottom layer (7"'), very particularly a pyrochlore for the top layer (10').

17. Use of a gas turbine system,
in which the nature of ceramic coatings of turbine blades or vanes of the gas turbine (100) according to Claim 1 is altered.

18. Use of a gas turbine system according to Claim 17,
wherein daily starts of the gas turbine are effected.

19. Use of a gas turbine system according to Claim 18,
wherein the gas turbine is in continuous operation for several days.

## Revendications

1. Procédé de fabrication d'une deuxième turbine à gaz, dans lequel, à partir d'une première turbine à gaz, on retire au moins une première couche (7, 13) calorifuge en céramique de premières aubes de la première turbine à gaz et on dépose une nouvelle deuxième couche (7', 7", 13') calorifuge en céramique pour fabriquer des deuxièmes aubes (7) de turbine sur les premières aubes de turbine dérevêtues,
et/ou
on dépose, sur de nouvelles deuxièmes aubes de turbine,
qui ont été fabriquées nouvellement,
une nouvelle deuxième couche (7', 7", 13') calorifuge en céramique,
qui (7", 7", 13') se distingue nettement de la première couche (7, 13) calorifuge en céramique,
à savoir en ce que la porosité est différente,
la différence absolue entre la porosité diminuée ou la porosité augmentée est d'au moins 2%,
dans lequel la différenciation signifie au moins, en outre :
l'épaisseur de couche est différente,
dans lequel la différence entre l'épaisseur de couche réduite et agrandie est d'au moins 50 µm,
et/ou
la stratification est différente,
dans lequel
ou bien on retire une couche (13) calorifuge en céramique à deux strates des premières aubes de turbine
et on dépose une couche (7") calorifuge à une strate, comme deuxième couche calorifuge en céramique, sur les deuxièmes ou nouvelles deuxièmes aubes de turbine,
ou bien on retire une couche (7) calorifuge à une strate des premières aubes de turbine
et on dépose une couche (13') calorifuge à deux strates, comme deuxième couche calorifuge en céramique, sur les deuxièmes ou nouvelles deuxièmes aubes de turbine,
notamment une couche (13') calorifuge à seulement deux strates
et dans lequel on incorpore les nouvelles deuxièmes et/ou les deuxièmes aubes de turbine dans la deuxième turbine à gaz.

2. Procédé suivant la revendication 1,
dans lequel on produit la couche (7") calorifuge en céramique à une strate en lui donnant une porosité de 18% + 4%.

3. Procédé suivant l'une des revendications 1 ou 2 ou suivant les deux revendications 1 et 2,
dans lequel on augmente la porosité de la deuxième couche (7', 7", 13') calorifuge en céramique des deuxièmes ou des nouvelles deuxièmes aubes de turbine par rapport à la porosité de la couche calorifuge des premières aubes de turbine.

4. Procédé suivant l'une des revendications 1 ou 2 ou les deux revendications 1 et 2,
dans lequel on diminue la porosité de la deuxième couche (7', 7", 13) calorifuge en céramique des deuxièmes ou des nouvelles deuxièmes aubes de turbine par rapport à la porosité de la couche calorifuge des premières aubes de turbine.

5. Procédé suivant l'une ou plusieurs des revendications 1 à 3,
dans lequel on remplace une couche (7) calorifuge en céramique plus mince, comme première couche calorifuge en céramique, par une couche (7', 13') calorifuge en céramique plus épaisse, comme deuxième couche calorifuge en céramique des deuxièmes ou des nouvelles deuxièmes aubes de turbine,
dans lequel la différence d'épaisseur est d'au moins +50µm.

6. Procédé suivant l'une ou plusieurs des revendications 1 à 4,
dans lequel on remplace une couche calorifuge en céramique plus épaisse, comme première couche calorifuge en céramique, par une couche calorifuge en céramique plus mince, comme deuxième couche calorifuge en céramique des deuxièmes ou des nouvelles deuxièmes aubes de turbine,
dans lequel la différence d'épaisseur est d'au moins -50µm.

7. Procédé suivant l'une ou plusieurs des revendications 1, 3 à 6,
dans lequel on produit une couche (13) calorifuge à deux strates, ayant une strate (7'") en céramique la plus basse, d'une porosité de 12% + 4% et
ayant une strate (10') extérieure en céramique, d'une porosité de 25% ± 4%,
dans lequel la différence absolue de porosité des couches (7'", 10') en céramique est d'au moins 2%,
notamment d'au moins 4%.

8. Procédé suivant l'une ou plusieurs des revendications 1, 3 à 7,
dans lequel la strate (7'") inférieure de la couche (13) calorifuge à deux strates est plus mince, notamment plus mince d'au moins 20%, que la strate (10') supérieure,
notamment dans lequel la strate (7'") inférieure de la couche (13) calorifuge à deux strates a une épaisseur de 75µm à 150µm,
d'une manière tout à fait particulière, l'épaisseur totale de la couche (13) calorifuge à deux strates va de 500µm à 800µm.

9. Procédé suivant l'une ou plusieurs des revendications 1, 3 à 8,
dans lequel on utilise, pour la strate (7'") en céramique inférieure de l'oxyde de zirconium stabilisé partiellement et pour la strate (10') en céramique supérieure, de l'oxyde de zirconium stabilisé partiellement.

10. Procédé suivant l'une ou plusieurs des revendications précédentes,
dans lequel on utilise de l'oxyde de zirconium pour la couche (7', 7", 13') calorifuge en céramique ou pour les strates (7"', 10') en céramique,
et la proportion monoclinale de la poudre à pulvériser est inférieure à 3%,
notamment inférieure à 1,5%,
d'une manière tout à fait particulière, d'au moins 0,3%.

11. Procédé suivant l'une des revendications 9 ou 10 ou les deux revendications 9 et 10,
dans lequel la proportion tétragonale de l'oxyde de zirconium est la proportion la plus grande,
en étant notamment d'au moins 60%,
d'une manière tout à fait particulière, d'au moins 75%.

12. Procédé suivant la revendication 10 ou 11,
dans lequel, par le traitement thermique, on réduit la proportion monoclinale de l'oxyde de zirconium,
notamment de la poudre à pulvériser,
d'au moins 50%,
notamment en dessous de la limite de détection.

13. Procédé suivant l'une ou plusieurs des revendications 1, 3 à 12,
dans lequel on pulvérise la strate (7'") inférieure sans polymère et on pulvérise la strate (10') supérieure avec du polymère.

14. Procédé suivant l'une ou plusieurs des revendications 1, 3 à 13,
dans lequel le diamètre (d₁₀) moyen de pore de la strate (10') en céramique supérieure est plus grand que le diamètre (d₇) moyen de pore de la strate (7'") inférieure en céramique, d'une manière tout à fait particulière d'au moins 20µm.

15. Procédé suivant l'une ou plusieurs des revendications 1, 3 à 14,
dans lequel on utilise la même poudre, de même composition et de même répartition granulométrique.

16. Procédé suivant la revendication 1, 3 à 14,
dans lequel on utilise, pour la strate (7'") inférieure en céramique, un matériau autre que pour la strate (10') supérieure en céramique,
notamment de l'oxyde de zirconium pour la strate (7'") inférieure,
d'une manière tout à fait particulière un pyrochlore pour la strate (10') supérieure.

17. Utilisation d'une installation de turbine à gaz,
dans laquelle le type de couches en céramique d'aubes de la turbine (100) à gaz est modifié suivant la revendication 1.

18. Utilisation d'une installation de turbine à gaz suivant la revendication 17,
dans laquelle on effectue des démarrages quotidiens de la turbine à gaz.

19. Utilisation d'une installation de turbine à gaz suivant la revendication 18,
dans laquelle on fait fonctionner la turbine à gaz en continu pendant plusieurs jours.
